# EUROPÄISCHE PATENTSCHRIFT

(11) **EP 1 867 037 B1**
(45) Veröffentlichungstag und Bekanntmachung des Hinweises auf die Patenterteilung: **31.07.2013**
(21) Anmeldenummer: 06707863.4
(22) Anmeldetag: 26.01.2006
(51) Int. Cl.: H02P 3/12, H02P 7/00

(54) **VORRICHTUNG ZUM STEUERN EINES ELEKTROMECHANISCHEN ENERGIEWANDLERS, INSBESONDERE EINES ELEKTROMOTORS**
DEVICE FOR CONTROLLING AN ELECTROMECHANICAL POWER CONVERTER, PARTICULARLY OF AN ELECTRIC MOTOR
DISPOSITIF POUR COMMANDER UN CONVERTISSEUR D'ENERGIE ELECTROMECANIQUE, NOTAMMENT UN MOTEUR ELECTRIQUE

(30) Priorität: 08.04.2005 DE 102005016278
(43) Veröffentlichungstag der Anmeldung: 19.12.2007
(73) Patentinhaber: Continental Automotive GmbH, 30165 Hannover (DE)
(72) Erfinder: HOPF, Steffen, 93059 Regensburg (DE); RINGLSTETTER, Manfred, 84187 Weng (DE)
(86) Internationale Anmeldenummer: PCT/EP2006/050479
(87) Internationale Veröffentlichungsnummer: WO 2006/106003

(56) Entgegenhaltungen:
- EP-A- 0 978 401
- DE-A1- 3 516 985
- DE-A1- 3 830 555
- DE-A1- 19 811 151
- DE-A1- 19 921 344

## Beschreibung

Die vorliegende Erfindung betrifft eine Steuervorrichtung für einen elektromechanischen Energiewandler, insbesondere Elektromotor und/oder -generator, mit zwei Wandleranschlüssen zwischen welchen in einem ersten Betriebsmodus eine Betriebsspannung anzulegen ist und welche in einem zweiten Betriebsmodus miteinander zu verbinden sind, wobei die Steuervorrichtung eine Betriebsspannungsquelle zum Bereitstellen der Betriebsspannung zwischen einem ersten Versorgungsanschluss und einem zweiten Versorgungsanschluss sowie steuerbare Schalter mittels welchen die Wandleranschlüsse jeweils auf den ersten Versorgungsanschluss und auf den zweiten Versorgungsanschluss schaltbar sind und eine Steuereinheit zum Ansteuern der Schalter umfasst. Ferner betrifft die Erfindung ein Verfahren zum Steuern eines solchen Wandlers.

Es sind Steuervorrichtungen zur Ansteuerung eines elektrischen Gleichstrommotors bekannt, bei welchen der Motor durch Anlegen einer von der Steuervorrichtung bereitgestellten Betriebsspannung an den Anschlussklemmen des Motors angetrieben wird (Antriebsmodus). Durch Anlegen der Betriebsspannung in wechselnder Polarität kann die Drehrichtung (Rechtslauf, Linkslauf) des Motors bestimmt bzw. umgekehrt werden. Die Drehzahl des Motors kann z.B. in gesteuerter oder geregelter Weise variiert werden durch eine entsprechende Variation der angelegten Betriebsspannung bzw. des Betriebsstroms. Um den Motor wieder zum Stillstand zu bringen, genügt es oftmals, den Motor einfach spannungslos zu schalten, da der Motor dann durch Reibungskräfte gebremst wird.

Falls der Motor jedoch schneller zum Stillstand gebracht bzw. "aktiv gebremst" werden soll, so kann dies dadurch erreicht werden, dass die Anschlussklemmen des Motors kurzgeschlossen werden (Bremsmodus).

Zur Initiierung des Bremsmodus bzw. des Kurzschlusses wird bei bekannten Steuervorrichtungen ein Schalter geschlossen (eingeschaltet), wodurch die Anschlussklemmen des Motors über einen den Schalter enthaltenden Kurzschlusspfad kurzgeschlossen werden.

Durch einen solchen Kurzschluss kann auch eine durch eine mit dem Motor mechanisch gekoppelte Last versuchte oder tatsächliche Motordrehung gebremst bzw. gehemmt werden.

Auch kann nach einem Stillstand des Motors der Kurzschluss aufgehoben und die Polarität der Betriebsspannung an den Anschlussklemmen umgekehrt werden, so dass der Motor in entgegengesetzter Richtung wieder anläuft.

Solche Motoren finden z.B. in der Automobiltechnik, im Anlagenbau und der Haushaltstechnik Verwendung. In der Praxis wechseln dabei die Modi (Antriebsmodus, Bremsmodus) bzw. die Bewegungs- bzw. Drehrichtungen (Rechtslauf, Linkslauf) über die Lebensdauer des Systems betrachtet zumeist sehr oft.

Die zum Anlegen der Betriebsspannung bzw. zum Kurzschließen verwendeten Schalter, z.B. Relaisschaltkontaktpaare, sind in manchen Anwendungsfällen über die Lebensdauer des Motors betrachtet einer erheblichen (kumulierten) Schaltbelastung ausgesetzt. Insbesondere beim Kurzschließen wird kurzzeitig eine große Belastung des hierfür verwendeten Schalters hervorgerufen, wenn dieser Schalter "hart geschaltet", d.h. unter der Last einer Induktionsspannung eingeschaltet wird und dann ein vergleichsweise großer Kurzschlussstrom über den Schalter fließt. Dies ist insofern problematisch, als durch diese Belastungen die Schaltkontakte einem erheblichen Verschleiß ausgesetzt sind.

Dieses Problem wurde in der Vergangenheit für mechanische Schalter (z.B. Relais) bereits dadurch gelöst, dass Schaltkontakte verwendet wurden, die so ausgelegt waren, dass sie der über die Lebensdauer des Motors zu erwartenden Anzahl von Kurzschlussschaltvorgängen sicher standhalten. Solche Schalter sind jedoch relativ teuer und benötigen relativ viel Bauraum. Eine andere, jedoch auch relativ teure Lösung bestand darin, sehr leistungsfähige Halbleiterschalter zu verwenden.

Aus der DE 198 11 151 A1 ist ein Verfahren zum Ansteuern eines elektrischen Antriebs, insbesondere in einem Kraftfahrzeug zur Ansteuerung eines verstellbaren Teils bekannt. Der Antrieb ist durch wenigstens zwei Schalter in zwei Richtungen zu betreiben und durch einen Leistungsschalter anzusteuern, so dass der mittels wenigstens eines ersten Schalters in eine Richtung betriebene Antrieb durch den Leistungsschalter ausgeschaltet und dieser wenigstens eine erste Schalter beim Ausschalten des Antriebs nicht geschaltet, insbesondere nicht geöffnet beziehungsweise gesperrt wird.

Die DE 199 21 344 A1 offenbart einen Antrieb für Verstelleinrichtungen mit einem Elektromotor und einer Schaltung zur An- und/oder Umsteuerung des Elektromotors. Die Schaltung umfasst einen Endschalter, der bei Erreichen der Endlage eines Stelltriebes eine Abschaltung oder Umschaltung des Motors bewirkt. Dabei ist vorgesehen, dass der Endschalter bei Betätigung einen Kurzschluss des Motorstromkreises bewirkt.

Es ist eine Aufgabe der Erfindung, eine Vorrichtung sowie ein Verfahren zum Steuern eines elektromechanischen Energiewandlers, insbesondere eines Elektromotors und/oder -generators, vorzusehen, bei denen vergleichsweise kostengünstige Schalter verwendet werden können ohne dadurch die Lebensdauer des Gesamtsystems drastisch zu verringern.

Die Grundidee der Erfindung besteht darin, zum Ansteuern des elektromechanischen Energiewandlers eine Mehrzahl von steuerbaren Schaltern zu verwenden und eine beim Verbinden, z.B. Kurzschließen von Wandleranschlüssen hervorgerufene Schaltbelastung über die Lebensdauer betrachtet auf mehrere Schalter aufzuteilen.

Die Steuervorrichtung ist bevorzugt separat von dem Wandler ausgebildet und lediglich über die Wandleranschlüsse mit dem Wandler verbunden.

In einer Ausführungsform der Erfindung handelt es sich bei dem elektromechanischen Energiewandler um einen Gleichstrommotor. Die Erfindung ist jedoch keineswegs darauf beschränkt sondern kann z.B. auch für einen elektrischen Generator oder eine Motor-Generator-Kombination Verwendung finden. Beispielsweise kann es sich um einen im Antriebsstrang eines Kraftfahrzeugs angeordneten Wandler handeln, der als Antrieb (insbesondere Hilfsantrieb in einem Hybridfahrzeug) und/oder Bremseinrichtung und/oder Generator (z.B. zur Energierückgewinnung in einem Hybridfahrzeug) wirken kann.

Eine bevorzugte Verwendung der Steuervorrichtung bzw. des Steuerverfahrens ist die Steuerung eines Gleichstrommotors, der als Stellantrieb bei einer so genannten Parkbremse eines Kraftfahrzeugs dient. Solche gewissermaßen auf Knopfdruck von Fahrzeugnutzern sehr einfach zu bedienende elektromechanische Bremsen ersetzen zunehmend die herkömmlichen, noch manuell zu bedienenden "Handbremsen". Bei diesen moderneren Bremsen, deren Betätigungskraft (üblicherweise über ein Getriebe) letztlich von einem elektromechanischen Wandler bereitgestellt wird, besteht im besonderen Maße der Wunsch nach einer möglichst genau definierten Verstellung der Bremsmechanik. In diesen Bremssystemen sollte der Elektromotor daher möglichst effizient bzw. rasch gebremst werden können, etwa um nach einem Lösen der Bremse die Bremsmechanik durch die Trägheit des Motors und/oder des Getriebes nicht unnötig weit zu verstellen. Dies würde beispielsweise die zum nächsten Aktivieren der Bremse benötigte Zeit unnötig vergrößern.

Die Verwendung der Erfindung bei elektromechanischen Bremsen (z.B. den erwähnten Parkbremsen) ist auch insofern interessant, als derartige Bremssysteme mit einer Antiblockierfunktion ausgebildet werden können, für die ein mehrmaliges bzw. sehr häufiges und rasch aufeinander folgendes Aktivieren und Deaktivieren der Bremse während eines einzigen Bremsvorgangs erforderlich ist. Die damit einhergehende vergleichsweise große Schaltbelastung von Schaltern der verwendeten Ansteuerschaltung lässt sich mit der Erfindung im Sinne einer Verlängerung der Lebensdauer besser handhaben.

Die obige Aufgabe wird gemäß eines Aspekts der Erfindung mit einer Vorrichtung nach Anspruch 1 bzw. mit einem Verfahren nach Anspruch 9 gelöst. Die abhängigen Ansprüche betreffen vorteilhafte Weiterbildungen der Erfindung.

Gemäß dieses Aspekts der Erfindung werden die zum Anlegen der Betriebsspannung mit wahlweiser Polarität verwendeten Schalter auch zum miteinander Verbinden der beiden Wandleranschlüsse verwendet, wobei die beim Verbinden hervorgerufene Schaltbelastung über einen größeren Zeitraum betrachtet wenigstens annähernd gleichmäßig auf diese Schalter verteilt wird. Diese Schaltvorgänge belasten also nicht stets ein und denselben Schalter bzw. ein und denselben Schalteranteil der Schaltermehrzahl.

Damit ist es in einfacher Weise möglich, die jeweilige Schaltbelastung der einzelnen Schalter untereinander anzugleichen, so dass die Gesamtlebensdauer der Schalteranordnung erhöht ist. In vielen Anwendungsfällen ist es damit möglich, Schalter zu verwenden, die für vergleichsweise geringe Schaltleistungen und/oder vergleichsweise wenig Schaltvorgänge ausgelegt sind. Hierzu ein Beispiel: Wären zum miteinander Verbinden der Wandleranschlüsse, nachfolgend auch als "Initiierung des zweiten Betriebsmodus" stets zwei Schalter bzw. Schalterkontakte verwendbar und würde tatsächlich stets der gleiche Schalter/Schalterkontakt verwendet, so kann durch die erfindungsgemäße Maßnahme z.B. eine gleiche Häufigkeit der Verwendung für beide Schalter/Schalterkontakte vorgesehen werden, so dass die Belastung jeder der beiden Schalter/Schalterkontakte im zeitlichen Mittel etwa nur der Hälfte der Belastung eines einzigen Schalters/Schalterkontakts entspricht.

Die in den Ansprüchen erwähnte "wenigstens annähernd gleichmäßige Verteilung" soll bedeuten, dass über einen längeren Zeitraum betrachtet bzw. im zeitlichen Mittel (z.B. über die gesamte Lebensdauer betrachtet) eine kumulierte Schaltbelastung (z.B. Anzahl der Einschaltvorgänge) der einzelnen Schalter auftritt, die in der gleichen Größenordnung liegt.

Das "miteinander Verbinden" ist nicht zwingend ein Kurzschließen. Bereits ein mehr oder weniger niederohmiges Verbinden der Wandleranschlüsse kommt in vielen Anwendungsfällen in Betracht. Beispielsweise kann der "Verbindungsstrom" über mindestens ein widerstandsbehaftetes Bauelement geführt werden. Durch Vorsehen eines solchen Widerstands, der auch ansteuerbar veränderlich vorgesehen sein kann, lässt sich die im zweiten Betriebsmodus beabsichtigte Wirkung (z.B. Bremswirkung bei einem Motor) variieren und/oder die Belastung der Schalter noch weiter reduzieren. Dazu können alle bekannten Arten von veränderlichen Widerständen zum Einsatz kommen.

Durch die Aufteilung der Schaltbelastung können tendenziell kostengünstigere und bei Verwendung von mechanischen Schaltern auch bauraumkleinere Schalter verwendet werden.

Die zur Initiierung des zweiten Betriebsmodus verwendbaren Schalter können beispielsweise unter Verwendung eines in einer Steuereinheit ablaufenden Software-Algorithmus in vorbestimmt wechselnder Weise belastet werden, insbesondere um eine über die Lebensdauer des Motors in etwa gleiche Belastung zu erzielen.

In einer bevorzugten Ausführungsform werden die Schalter mit gleicher Häufigkeit zur Initiierung des zweiten Betriebsmodus eingeschaltet, um die Schaltbelastung gleichmäßig zu verteilen.

Wenn zu einem bestimmten Zeitpunkt der zweite Betriebsmodus initiiert werden soll und hierfür verschiedene Schalter genutzt werden können, so kann z.B. derjenige Schalter ausgewählt und tatsächlich verwendet werden, der die geringste kumulierte Schaltbelastung (z.B. aus einer "Schalthistorie" ermittelt) aufweist.

Die "kumulierte Schaltbelastung" kann z.B. in sehr einfacher Weise als Gesamtanzahl bisheriger Einschaltvorgänge zum miteinander Verbinden der Wandleranschlüsse angesehen werden. Diese Anzahl kann für die einzelnen Schalter variieren solange die Summe der Belastung der einzelnen Schalter in etwa gleich ist. Dabei kann auch vorgesehen sein, dass derselbe Schalter bzw. Schalterkontakt mehrmals hintereinander zur Initiierung des zweiten Betriebsmodus verwendet wird und ein anderer Schalter oder Schalterkontakt nachfolgend ebenfalls mehrmals hintereinander zur Initiierung verwendet wird. Alternativ können zwei oder mehrere verwendbare Schalter abwechselnd bzw. zyklisch verwendet werden.

Es soll nicht ausgeschlossen sein, dass bei der Ermittlung der kumulierten Schaltbelastung das "Belastungsausmaß" der einzelnen Einschaltvorgänge mitberücksichtigt wird. Dies ist insbesondere in Anwendungsfällen von Vorteil, bei denen z.B. die Drehgeschwindigkeit des Wandlers unmittelbar vor Initiierung des zweiten Betriebsmodus unterschiedlich sein kann. In diesem Fall können Initiierungen des zweiten Betriebsmodus (z.B. zum aktiven Bremsen eines Gleichstrommotors) bei hoher Drehgeschwindigkeit stärker gewichtet in die Ermittlung der kumulierten Schaltbelastung eingehen als Initiierungen bei niedrigerer Drehgeschwindigkeit.

In einer Ausführungsform ist eine Speichereinrichtung zur Speicherung der kumulierten Schaltbelastung jedes Schalters und/oder einer anderen Information vorgesehen, wobei die Steuereinheit in einem Bedarfsfall basierend auf der gespeicherten Information einen zur Initiierung des zweiten Betriebsmodus einzuschaltenden Schalter bzw. Schalterkontakt auswählt.

Die Speichereinrichtung kann z.B. durch einen Lese-Schreib-Speicher wie ein EEPROM, ein RAM oder eine Festplatte realisiert werden.

Mit einer Speichereinrichtung kann die Auswahl des zur Initiierung des zweiten Betriebsmodus einzuschaltenden Schalters vereinfacht werden. Wenn z.B. die kumulierte Schaltbelastung der Schalter gespeichert wird, so genügt eine Aktualisierung dieser Information nach jedem entsprechenden Schaltvorgang. Alternativ oder zusätzlich kann z.B. die Information gespeichert werden, welcher Schalter bei der nächsten Initiierung zu verwenden ist.

Die erfindungsgemäß vorgesehene Verteilung der Schaltbelastung wird in einer Ausführungsform durch eine elektronische Steuereinheit realisiert, die z.B. programmgesteuert sein kann (z.B. SPS, Mikrocontroller oder PC). Diese Steuereinheit kann auch alle anderen Betriebsmodi, insbesondere einen oder mehrere Antriebsmodi ansteuern. Wenngleich die Schaltabfolge fest verdrahtet sein kann, so ist insbesondere bei Verwendung der oben erwähnten Speichereinrichtung ein Steuerungsbetrieb durch (gegebenenfalls veränderbare) Software zu bevorzugen.

In einer Ausführungsform ist vorgesehen, dass die zur Initiierung des zweiten Betriebsmodus verwendeten Schalter statistisch bestimmt werden. Hierfür kann z.B. stets einer von mehreren zur Initiierung des zweiten Betriebsmodus verwendbaren Schaltern möglichst zufällig (z.B. durch einen Zufallsgenerator) ausgewählt werden. Auch durch diese, in der Regel besonders einfach zu realisierende Gestaltung kann die Schaltbelastung der Schalter über die gesamte Lebensdauer betrachtet im Wesentlichen gleichmäßig verteilt werden.

In einer bevorzugten Ausführungsform ist wenigstens einer der Schalter als mechanischer Schalter, insbesondere Relaisschaltkontaktpaar, ausgebildet. Damit lassen sich insbesondere hohe Schaltbelastungen vergleichsweise kostengünstig bewältigen. Wenn gemäß der Erfindung die Schaltbelastung auf mehrere Relaisschaltkontaktpaare aufgeteilt wird, so erhöht dies vorteilhaft die Zeit, bis zu der ein solches Kontaktpaar ausfällt.

Zur weiteren Bauraumreduzierung ist es von Vorteil, wenn mehrere der Schalter, insbesondere alle Schalter, in einer baulichen Einheit zusammengefasst sind. Diese Bauraumverringerung ist insbesondere bedeutsam bei der Verwendung mechanischer Schalter. Des weiteren reduziert sich durch eine Zusammenfassung der Aufwand bei der Fertigung der Steuervorrichtung.

Die Schalterzusammenfassung kann beispielsweise dergestalt vorgesehen sein, dass ein erster Schalter zum Verbinden eines ersten Wandleranschlusses mit dem ersten Versorgungsanschluss als "Umschalter" zusammengefasst ist mit einem zweiten Schalter zum Verbinden des ersten Wandleranschlusses mit dem zweiten Versorgungsanschluss. In analoger Weise kann auch ein zweiter Umschalter gebildet sein durch Zusammenfassung eines dritten Schalters zum Verbinden des zweiten Wandleranschlusses mit dem ersten Versorgungsanschluss mit einem vierten Schalter zum Verbinden des zweiten Wandleranschlusses mit dem zweiten Versorgungsanschluss. Diese vier Schalter können also z.B. durch zwei Umschaltrelais implementiert sein. Die beiden Umschalter können weiter zusammengefasst werden, z.B. in einem Doppel-Umschaltrelais oder dergleichen.

Neben den erwähnten eher allgemeinen Vorteilen einer baulichen Zusammenfassung von Schaltern besitzt diese Zusammenfassung im Rahmen der Erfindung eine weitere wesentliche Bedeutung. Bei einem Defekt lediglich eines einzigen Schalters einer solchen Baueinheit ist es in der Praxis zumeist zweckmäßig wenn nicht notwendig, die gesamte Baueinheit (z.B. ein Mehrfachrelais oder ein Endstufen-IC) auszutauschen. Wenn jedoch gemäß der Erfindung die Schaltbelastung wenigstens annähernd gleichmäßig auf die in der Baueinheit enthaltenen Schalter verteilt wird, so bedeutet dies, dass die Belastbarkeit der gesamten Baueinheit mehr oder weniger optimal ausgenutzt wird.

Bei einem weiteren Aspekt der Erfindung werden mehrere steuerbare Schalter zum Anlegen der Betriebsspannung an die Wandleranschlüsse verwendet, wobei ein weiterer (zusätzlicher) steuerbarer Schalter vorgesehen ist, mittels welchem die Wandleranschlüsse miteinander verbindbar sind. Mit diesem zusätzlichen Schalter kann die bei Initiierung des zweiten Betriebsmodus hervorgerufene Schaltbelastung vorteilhaft ganz oder teilweise "von den ersteren Schaltern bzw. Schalterkontakten genommen" werden. Auch dadurch lässt sich die Lebensdauer des Gesamtsystems selbst bei Nutzung vergleichsweise kostengünstiger Schalter erhöhen.

Die Kombination der beiden Erfindungsaspekte besteht darin, dass über längere Zeiträume betrachtet sowohl die erstgenannten Schalter als auch der weitere Schalter zur Initiierung des zweiten Betriebsmodus verwendet werden. Insbesondere kann der weitere Schalter bei der wenigstens annähernd gleichmäßigen Verteilung der Schaltbelastung einbezogen werden. Dadurch ist es möglich, die Belastung der einzelnen Schalter noch weiter zu verringern, wodurch die einzelnen Schalter noch kompakter und/oder kostengünstiger ausgebildet werden können.

In einer Ausführungsform ist vorgesehen, dass der weitere Schalter separat von den erstgenannten Schaltern ausgebildet ist. Dadurch kann die vorgeschlagene Vorrichtung an eine Vielzahl von Anwendungen angepasst werden. Auch ist es vorteilhaft möglich, die erstgenannten Schalter kostengünstig durch ein oder mehrere Relais zu implementieren und den z.B. als stark belasteten Kurzschlussschalter verwendeten weiteren Schalter aufwändiger (belastbarer) zu implementieren (z.B. als Leistungshalbleiterschalter).

Der weitere Schalter muss nicht zwingend so angeordnet sein, dass die beiden Wandleranschlüsse direkt miteinander verbindet, sondern kann diese Verbindung alternativ auch unter Mitbenutzung der erstgenannten Schalter realisieren.

Es ist jedoch z.B. auch möglich, den weiteren Schalter als ein weiteres Kontaktpaar eines ohnehin zur Implementierung der erstgenannten Schalter vorhandenen Relais vorzusehen.

Die Erfindung wird nachfolgend anhand von Ausführungsbeispielen mit Bezug auf die beigefügten Zeichnungen näher beschrieben. Es stellen dar:
- Fig. 1: zeigt den Aufbau einer erfindungsgemäßen Vorrichtung gemäß des ersten Aspekts der Erfindung,
- Fig. 2: zeigt den Aufbau einer erfindungsgemäßen Vorrichtung gemäß des zweiten Aspekts der Erfindung, und
- Fig. 3: zeigt eine weitere Ausgestaltung einer erfindungsgemäßen Vorrichtung gemäß des zweiten Aspekts der Erfindung.

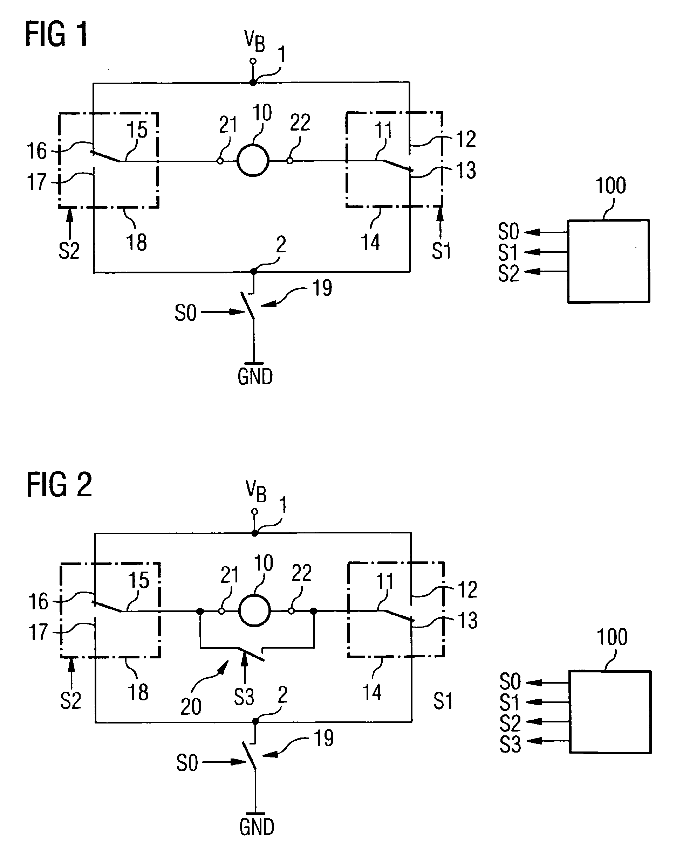

Fig. 1 zeigt einen mit 10 bezeichneten Elektromotor, der mit Umschaltern 14 und 18 verbunden ist. Die Umschalter 14 und 18 enthalten jeweils einen gemeinsamen Kontakt 11, 15, einen ersten Arbeitskontakt 12, 16 und einen zweiten Arbeitskontakt 13, 17. Die Umschalter 14, 18 sind in einem einzigen Relais baulich zusammengefasst, welches durch zwei Steuersignale S1 und S2 angesteuert wird. Die gemeinsamen Kontakte 11, 15 sind mit Anschlussklemmen 21, 22 des Motors 10 verbunden. Die ersten Arbeitskontakte 12, 16 sind mit einem ersten Versorgungsanschluss 1 (hier: positive Betriebsspannung V_{B}) verbunden. Die zweiten Arbeitskontakte 13, 17 sind mit einem zweiten Versorgungsanschluss 2 verbunden, der wiederum über einen Hauptschalter 19 mit elektrischer Masse GND verbindbar ist. Auch der Hauptschalter 19 ist als Relaiskontaktpaar in einem Relais implementiert, welches durch ein Steuersignal S0 angesteuert wird. Ein solcher Hauptschalter könnte alternativ auch als elektronischer Schalter (z. B. MOSFET) realisiert sein. Ferner zeigt Fig. 1 noch eine Steuereinheit 100, welche die Steuersignale S0, S1 und S2 zur Steuerung der Umschalter 14, 18 sowie des Hauptschalters 19 ausgibt.

Um den Motor 10 anzutreiben (erster Betriebsmodus), muss der Hauptschalter 19 geschlossen sein. Dies geschieht durch das Steuersignal S0 der Steuereinheit 100. Die Drehrichtung des Motors 10 wird über die Stellung der Umschalter 14 und 18 bestimmt. Ist der Stromkreislauf von der Betriebsspannung V_{B} über ersten Arbeitskontakt 16, gemeinsamen Kontakt 15, Motoranschluss 21, Motor 10, Motoranschluss 22, gemeinsamen Kontakt 11, zweiten Arbeitskontakt 13 und Hauptschalter 19 zur Masse GND geschlossen, so dreht sich der Motor 10 in eine bestimmte Richtung, z.B. nach rechts. Wenn hingegen der Stromkreislauf von Betriebsspannung V_{B} über ersten Arbeitskontakt 12, gemeinsamen Kontakt 11, Motoranschluss 22, Motor 10, Motoranschluss 21, gemeinsamen Kontakt 15, zweiten Arbeitskontakt 17 und Hauptschalter 19 hin zur Masse GND geschlossen ist, dreht sich der Motor 10 in entgegengesetzter Richtung.

Soll der Motor 10 gebremst werden, so kann hierfür der Hauptschalter 19 geöffnet werden. Für ein "aktives Bremsen" (zweiter Betriebsmodus), etwa um einen Motorstillstand in kürzerer Zeit zu erzielen, gibt es im dargestellten Beispiel zwei Möglichkeiten:
a) Die gemeinsamen Kontakte 11, 15 der Umschalter 14, 18 werden jeweils auf die ersten Arbeitskontakte 12, 16 geschaltet, d.h. beide Motoranschlüsse 21, 22 mit dem ersten Versorgungsanschluss 1 verbunden. Dies wird nachfolgend auch als "high side brake" bezeichnet.
b) Die gemeinsamen Kontakte 11, 15 der Umschalter 14, 18 werden jeweils auf die zweiten Arbeitskontakte 13, 17 geschaltet, d.h. beide Motoranschlüsse 21, 22 mit dem zweiten Versorgungsanschluss 2 verbunden. Dies wird nachfolgend auch als "low side brake" bezeichnet.

Im Fall "high side brake" sieht der Stromkreislauf wie folgt aus: Betriebsspannung V_{B}, erster Arbeitskontakt 12, gemeinsamer Kontakt 11, Motoranschluss 22, Motor 10, Motoranschluss 21, gemeinsamer Kontakt 15, erster Arbeitskontakt 16, Betriebsspannung V_{B}.

Im Fall "low side brake" sieht der Stromkreislauf wie folgt aus: Masse GND, zweiter Arbeitskontakt 13, gemeinsamer Kontakt 11, Motoranschluss 22, Motor 10, Motoranschluss 21, gemeinsamer Kontakt 15, zweiter Arbeitskontakt 17, Masse GND.

Durch jede dieser beiden möglichen Beschaltungen wird der Motor 10 kurzgeschlossen, was aufgrund der Eigeninduktion zu einem baldigen Stillstand führt. Dieser aktive Bremsvorgang kann auch bei geschlossenem Hauptschalter 19 ausgeführt werden.

Der in diesem Ausführungsbeispiel im Massepfad vorgesehene Hauptschalter 19 zur Unterbrechung bzw. Zufuhr der Betriebsspannung an die Versorgungsanschlüsse 1, 2 könnte alternativ oder zusätzlich auch auf der "high side", also die Betriebsspannung V_{B} unterbrechend angeordnet sein.

Die Steuereinheit 100 steuert den Motorbetrieb, insbesondere die einzelnen Schaltvorgänge durch Ausgabe der Steuersignale S0, S1 und S2. Durch das Steuersignal S0 kann der Hauptschalter 19 ein- und ausgeschaltet werden. Durch das Steuersignal S1 kann der gemeinsamen Kontakt 11 des Umschalters 14 wahlweise von dem ersten Arbeitskontakt 12 auf den zweiten Arbeitskontakt 13 oder umgekehrt geschaltet werden. Das Steuersignal S2 schaltet den gemeinsamen Kontakt 15 des Umschalters 18 von dem ersten Arbeitskontakt 16 auf den zweiten Arbeitskontakt 17 und umgekehrt.

In Tabelle 1 sind die Signalzustände der Steuereinheit 100 für verschiedene Betriebsmodi angegeben. Dabei bedeutet "0", dass der Hauptschalter 19 offen ist bzw. der gemeinsame Kontakt des betreffenden Umschalters 14 oder 18 mit dem zweiten Arbeitskontakt verbunden ist, "1", dass der Hauptschalter 19 geschlossen ist bzw. der gemeinsame Kontakt des Umschalters 14 bzw. 18 mit dem ersten Arbeitskontakt verbunden ist, und "X", dass der Zustand des Schalters nicht relevant ist.

**Tabelle 1**

| Modus: | S0: | S1: | S2: |
|---|---|---|---|
| Linkslauf | 1 | 1 | 0 |
| Rechtslauf | 1 | 0 | 1 |
| Auslaufen | 0 | X | X |
| "high side brake" | X | 1 | 1 |
| "low side brake" | X | 0 | 0 |

Die Ansteuerung der Schaltvorgänge, bzw. die Ausgabe der Schaltsignale S1 und S2, wonach über "high side brake" oder "low side brake" gebremst wird, erfolgt in programmgesteuerter Weise nach einem zuvor festgelegten Algorithmus, durch welchen die Belastung der Schaltkontakte 11, 12, 13 und 15, 16, 17 weitgehend ausgewogen erfolgt. Dieser Algorithmus wird entweder von der Steuereinheit 100 ausgeführt oder durch eine (nicht gezeigte) Zusatzeinrichtung, die mit der Steuereinheit 100 verbunden ist.

Für die konkrete Realisierung des Algorithmus gibt es vielfältige Möglichkeiten. Bei der in Fig. 1 dargestellten Ausführungsform ist beispielsweise vorgesehen, dass die Bremsvorgänge zum Bremsen des Motors 10 n Mal hintereinander durch "high side brake" und dann n Mal hintereinander durch "low side brake" bewerkstelligt werden, wobei n eine kleine ganze Zahl ist. Im einfachsten Fall ist n=1 gewählt, so dass die Initiierung des Bremsmodus abwechselnd durch "high side brake" und "low side brake" erfolgt.

Bei dieser abwechselnden Kurzschlussart genügt es, im Bereich der Steuervorrichtung eine Information darüber zu speichern (fest verdrahtete Logik und/oder mittels Software), welche Kurzschlussart zuletzt verwendet wurde (oder als nächstes auszuwählen ist). Im Ergebnis kommt es zu einer Vergleichmäßigung der Schaltbelastung gegenüber dem Fall, in welchem zum Kurzschließen stets die gleiche der erwähnten Kurzschlussarten zum Einsatz kommt.

Eine weitere Verbesserung ergibt sich, wenn zum Bremsen nicht nur "high side brake" und "low side brake" etwa gleich häufig vorkommen, sondern jede dieser beiden Kurzschlussarten wiederum wenigstens annähernd gleich häufig mittels der beiden jeweils hierfür verwendbaren Umschalter 14, 18 initiiert wird. Für letztere Auswahl müssen gegebenfalls zunächst beide Umschalter 14, 18 gleichzeitig umgeschalten werden und dann der ausgewählte Umschalter 14 oder 18 wieder zurück umgeschalten werden.

Um die Schaltbelastung noch gleichmäßiger auf die Umschalter 14, 18 bzw. die daraus gebildeten Einzelschalter 11, 12; 11, 13; 15, 16; 15, 17 zu verteilen, kann auch vor jeder Bremsmodusinitiierung eine für das nachfolgende Kurzschlussschalten repräsentative Größe gemessen werden, um bei einer Ermittlung und Speicherung bzw. Aktualisierung der kumulierten Schaltbelastung berücksichtigt zu werden. Eine hierfür in Frage kommende Größe ist beispielsweise die Drehzahl des Motors, der Betrag der Betriebsspannung oder das Ausmaß der mit dem Motor gekoppelten Last.

In der in Fig. 1 dargestellten Situation wird der Motor 10 nicht angetrieben. Um einen Antriebsmodus entsprechend der in Fig. 1 dargestellten Stellung des Doppelumschalters 14, 18 zu initiieren, gibt es zwei Möglichkeiten: Eine Möglichkeit besteht darin, den Hauptschalter 19 zu schließen. Die andere Möglichkeit besteht darin, zunächst einen der Umschalter 14, 18 umzuschalten, dann den Hauptschalter 19 einzuschalten, und schließlich den Umschalter 14 bzw. 18 wieder zurück umzuschalten. Im ersten Fall wird bei der Initiierung des Antriebsmodus lediglich der Hauptschalter 19 wesentlich belastet, wohingegen im zweiten Fall lediglich der entsprechende Umschalter 14 oder 18 wesentlich belastet wird (hoher Anlaufstrom). Diese durch Initiierung des Antriebsmodus hervorgerufene Belastung wird in der Regel kleiner als die beim Verbinden der Motoranschlüsse 21, 22 hervorgerufene Belastung sein, könnte jedoch im Rahmen der Erfindung bei der gewünschten Verteilung der durch Initiierung des zweiten Betriebsmodus hervorgerufenen Schaltbelastung berücksichtigt werden. So könnte bei der Auswahl des zum Kurzschluss zu verwendeten Schalters die kumulierte Schaltbelastung der einzelnen Schalter auch solche Antriebsinitiierungen berücksichtigen und/oder, umgekehrt, sogar die oben erläuterte Auswahl der Initiierungart für den Antriebsmodus ebenfalls auf Basis einer gespeicherten bzw. aktualisierten kumulierten Schaltbelastung (oder statistisch) erfolgen.

Bei der nachfolgenden Beschreibung von weiteren Ausführungsbeispielen werden für gleichwirkende Komponenten die gleichen Bezugszahlen verwendet. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Fig. 2 zeigt eine weitere Ausführungsform einer Steuervorrichtung 10 zur Ansteuerung eines Motors 10.

Bei dieser Ausführungsform ist ein zusätzlicher Schalter 20 vorgesehen, der parallel zu dem Motor 10 bzw. zu den Motoranschlüssen 21, 22 geschaltet ist. Mit Hilfe des Schalters 20 ist es somit möglich, den Motor 10, unabhängig von der Schaltstellung der Umschalter 14, 18, kurzzuschließen.

Die Steuereinheit 100 steuert dabei die einzelnen Schaltvorgänge wieder über Steuersignale S0, S1, S2 und S3. Das Steuersignal S3 schaltet den zusätzlichen Schalter 20 vom geöffneten Zustand in den geschlossenen Zustand und umgekehrt. Der Hauptschalter 19 muss geöffnet sein, wenn der weitere Schalter 20 zum Kurzschließen des Motors 10 geschlossen wird. Somit besteht eine entsprechende Abhängigkeit zwischen den Signalen S0 und S3.

In Tabelle 2 sind die möglichen Signalzustände der Steuereinheit 100 von Fig. 2 angegeben. Dabei haben "0", "1" und "X" die gleiche Bedeutung wie in Tabelle 1.

**Tabelle 2**

| Modus: | S0: | S1: | S2: | S3: |
|---|---|---|---|---|
| "high side brake" | 0 | 1 | 1 | 0 |
| "low side brake" | 0 | 0 | 0 | 0 |
| Kurzschluss | 0 | X | X | 1 |

Durch Verwendung des zusätzlichen Schalters 20 zum Kurzschließen der Motoranschlüsse 21, 22 können die Schaltbelastungen der Umschalter 14, 18 verringert werden. Die sich daraus ergebende Verlängerung der Lebensdauer des Gesamtsystems kann hierbei mit der mit Bezug auf Fig. 1 beschriebenen Besonderheit kombiniert werden, dass die bei Initiierung des Bremsmodus hervorgerufene Schaltbelastung auch wenigstens teilweise den Umschaltern 14, 18 zugewiesen wird. Letztere Maßnahme ist beispielsweise vor allem dann interessant, wenn auch der zusätzliche Schalter 20 zusammen mit den Umschaltern 14, 18 in einem einzigen Relais gebildet ist.

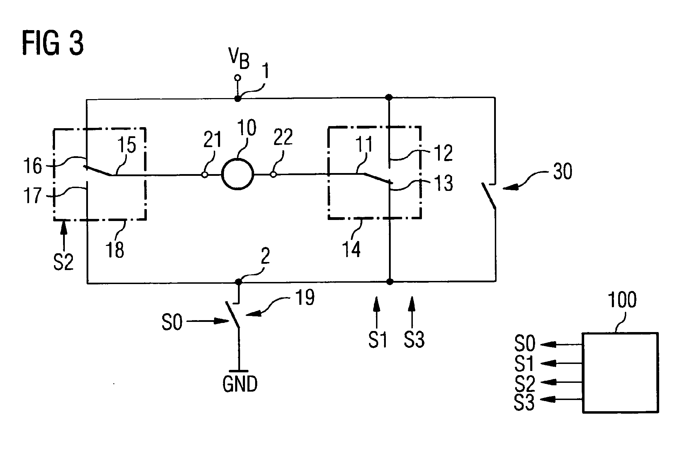

Fig. 3 zeigt eine Modifikation der in Fig. 2 gezeigten Ausführungsform.

Auch hier ist ein zusätzlicher Schalter 30 vorgesehen, mittels welchem der Motor 10 kurzgeschlossen werden kann.

Der Schalter 30 ist jedoch (anders als der Schalter 20 von Fig. 2) zum miteinander Verbinden der Versorgungsanschlüsse 1, 2 angeordnet. Mit Hilfe des Schalters 30 ist es trotzdem möglich, den Motor kurzzuschließen. Vor dem Einschalten des Schalters 30 zur Initiierung des Kurzschlusses muss der Hauptschalter 19 geöffnet sein bzw. werden. Außerdem müssen die beiden Umschalter 14, 18 hierfür in eine von zwei möglichen Schaltstellungskombinationen gebracht werden, nämlich in die in Fig. 3 dargestellte Schaltstellungskombination oder eine entgegengesetzte Kombination, bei welcher sowohl der Umschalter 14 als auch der Umschalter 18 jeweils umgeschaltet sind.

In Tabelle 3 sind die möglichen Signalzustände von S0, S1, S2 und S3 in Fig. 3 angegeben. Dabei haben "0", "1" und "X" die gleiche Bedeutung wie in den Tabellen 1 und 2.

**Tabelle 3**

| Modus: | S0: | S1: | S2: | S3: |
|---|---|---|---|---|
| "high side brake" | 0 | 1 | 1 | 0 |
| "low side brake" | 0 | 0 | 0 | 0 |
| Kurzschluss I | 0 | 1 | 0 | 1 |
| Kurzschluss II | 0 | 0 | 1 | 1 |

Mit den oben beschriebenen Ausführungsbeispielen ergibt sich für einen Gleichstrommotor die Möglichkeit, den Motor sowohl in verschiedenen Richtungen anzutreiben als auch abzubremsen. Über die Lebensdauer betrachtet werden die dabei verwendeten Umschalter und/oder die einzelnen Schaltkontakte in etwa gleich belastet, was deren Lebensdauer und Zuverlässigkeit erhöht.

Eine besonders vorteilhafte Verwendung ergibt sich in der Automobiltechnik, z.B. für einen im Antriebsstrang eines Kraftfahrzeugs angeordneten elektromechanischen Energiewandler (z.B. Elektromotor/Generator).

## Patentansprüche

1. Steuervorrichtung für einen elektromechanischen Energiewandler (10), insbesondere Elektromotor und/oder - generator, mit zwei Wandleranschlüssen (21, 22), zwischen welchen in einem ersten Betriebsmodus eine Betriebsspannung (V_{B}) anzulegen ist und welche in einem zweiten Betriebsmodus miteinander zu verbinden sind,
wobei die Steuervorrichtung umfasst:
eine Betriebsspannungsquelle zum Bereitstellen der Betriebsspannung (V_{B}) zwischen einem ersten Versorgungsanschluss (1) und einem zweiten Versorgungsanschluss (2),
steuerbare Schalter (11, 12; 11, 13; 15, 16; 15, 17), mittels welchen die Wandleranschlüsse (21, 22) jeweils auf den ersten Versorgungsanschluss (1) und auf den zweiten Versorgungsanschluss (2) schaltbar sind, und
eine Steuereinheit (100) zum Ansteuern der Schalter (11, 12; 11, 13; 15, 16; 15, 17),
**dadurch gekennzeichnet, dass** eine Speichereinrichtung zur Speicherung der kumulierten Schaltbelastung jedes Schalters (11, 12; 11, 13; 15, 16; 15, 17) und/oder einer anderen Information vorgesehen ist,
und dass die Steuereinheit (100) derart eingerichtet ist, dass eine durch Initiierung des zweiten Betriebsmodus hervorgerufene Schaltbelastung der Schalter (11, 12; 11, 13; 15, 16; 15, 17) wenigstens annähernd gleichmäßig auf die Schalter (11, 12; 11, 13; 15, 16; 15, 17) verteilt wird und basierend auf der gespeicherten Information einen zur Initiierung des zweiten Betriebsmodus einzuschaltenden Schalter (11, 12; 11, 13; 15, 16; 15, 17) auswählt.

2. Steuervorrichtung nach Anspruch 1, wobei die Steuereinheit (100) derart eingerichtet ist, dass die Schalter (11, 12; 11, 13; 15, 16; 15, 17) mit gleicher Häufigkeit zur Initiierung des zweiten Betriebsmodus eingeschaltet werden.

3. Steuervorrichtung nach einem der vorangegangenen Ansprüche, wobei die Steuereinheit (100) derart eingerichtet ist, dass die zur Initiierung des zweiten Betriebsmodus verwendeten Schalter (11, 12; 11, 13; 15, 16; 15, 17) statistisch bestimmt werden.

4. Steuervorrichtung nach einem der vorangegangenen Ansprüche, wobei wenigstens einer der Schalter (11, 12; 11, 13; 15, 16; 15, 17) als mechanischer Schalter, insbesondere als Relaisschaltkontaktpaar, ausgebildet ist.

5. Steuervorrichtung nach einem der vorangegangenen Ansprüche, wobei mehrere der Schalter (11, 12; 11, 13; 15, 16; 15, 17), insbesondere alle Schalter, in einer baulichen Einheit zusammengefasst sind.

6. Steuervorrichtung nach einem der Ansprüche 1 bis 5, für einen elektromechanischen Energiewandler (10), insbesondere Elektromotor und/oder -generator, mit zwei Wandleranschlüssen (21, 22), zwischen welchen in einem ersten Betriebsmodus eine Betriebsspannung (V_{B}) anzulegen ist und welche in einem zweiten Betriebsmodus miteinander zu verbinden sind,
wobei die Steuervorrichtung umfasst:
eine Betriebsspannungsquelle zum Bereitstellen der Betriebsspannung (V_{B}) zwischen einem ersten Versorgungsanschluss (1) und einem zweiten Versorgungsanschluss (2),
steuerbare Schalter (11, 12; 11, 13; 15, 16; 15, 17), mittels welchen die Wandleranschlüsse (21, 22) jeweils auf den ersten Versorgungsanschluss (1) und auf den zweiten Versorgungsanschluss (2) schaltbar sind,
einen weiteren steuerbaren Schalter (20, 30), mittels welchem die Wandleranschlüsse (21, 22) miteinander verbindbar sind, und
eine Steuereinheit (100) zum Ansteuern der Schalter (11, 12; 11, 13; 15, 16; 15, 17).

7. Steuervorrichtung nach Anspruch 6, wobei die Steuereinheit (100) derart eingerichtet ist, dass bei der wenigstens annähernd gleichmäßigen Verteilung der durch Initiierung des zweiten Betriebsmodus hervorgerufenen Schaltbelastung auch der weitere Schalter (20, 30) einbezogen wird.

8. Steuervorrichtung nach Anspruch 6 oder 7, wobei der weitere Schalter (20, 30) separat von den erstgenannten Schaltern (11, 12; 11, 13; 15, 16; 15, 17) ausgebildet ist.

9. Verfahren zum Steuern eines elektromechanischen Energiewandlers (10), insbesondere eines Elektromotors und/oder -generators, mit zwei Wandleranschlüssen (20, 21), zwischen welchen in einem ersten Betriebsmodus eine Betriebsspannung (V_{B}) anzulegen ist und welche in einem zweiten Betriebsmodus miteinander zu verbinden sind, umfassend die Schritte:
Bereitstellen der Betriebsspannung (V_{B}) zwischen einem ersten Versorgungsanschluss (1) und einem zweiten Versorgungsanschluss (2),
Schalten der Wandleranschlüsse (21, 22) jeweils auf den ersten Versorgungsanschluss (1) oder auf den zweiten Versorgungsanschluss (2) mittels steuerbarer Schalter (11, 12; 11, 13; 15, 16; 15, 17),
**gekennzeichnet durch** die folgenden Schritte:
speichern der kumulierten Schaltbelastung jedes Schalters (11, 12; 11, 13; 15, 16; 15, 17) und/oder einer anderen Information in einer Speichereinrichtung und
Ansteuern der Schalter (11, 12; 11, 13; 15, 16; 15, 17), derart, dass eine **durch** Initiierung des zweiten Betriebsmodus hervorgerufene Schaltbelastung der Schalter (11, 12; 11, 13; 15, 16; 15, 17) annähernd gleichmäßig auf die Schalter (11, 12; 11, 13; 15, 16; 15, 17) verteilt wird und Auswählen eines zur Initiierung des zweiten Betriebsmodus einzuschaltenden Schalters (11, 12; 11, 13; 15, 16; 15, 17) basierend auf der gespeicherten Information.

10. Verfahren nach Anspruch 9, zum Steuern eines elektromechanischen Energiewandlers (10), insbesondere eines Elektromotors und/oder -generators, mit zwei Wandleranschlüssen (21, 22), zwischen welchen in einem ersten Betriebsmodus eine Betriebsspannung (V_{B}) anzulegen ist und welche in einem zweiten Betriebsmodus miteinander zu verbinden sind, umfassend die Schritte:
Bereitstellen der Betriebsspannung (V_{B}) zwischen einem ersten Versorgungsanschluss (1) und einem zweiten Versorgungsanschluss (2),
Schalten der Wandleranschlüsse (21, 22) jeweils auf den ersten Versorgungsanschluss (1) oder auf den zweiten Versorgungsanschluss (2) mittels steuerbarer Schalter (11, 12; 11, 13; 15, 16; 15, 17),
miteinander Verbinden der Wandleranschlüsse (21, 22) mittels eines weiteren steuerbaren Schalters (20, 30), und
Ansteuern der Schalter (11, 12; 11, 13; 15, 16; 15, 17) und des weiteren Schalters (20, 30).

## Claims

1. Control device for an electromechanical energy converter (10), in particular electric motor and/or electric generator, comprising two converter connections (21, 22), between which, in a first operating mode, an operating voltage (V_{B}) is to be applied and which are to be connected to one another in a second operating mode,
wherein the control device comprises:
an operating voltage source for providing the operating voltage (V_{B}) between a first supply connection (1) and a second supply connection (2),
controllable switches (11, 12; 11, 13; 15, 16; 15, 17), by means of which the converter connections (21, 22) can each be switched onto the first supply connection (1) and onto the second supply connection (2), and
a control unit (100) for actuating the switches (11, 12; 11, 13; 15, 16; 15, 17),
**characterized in that** a storage device for storing the accumulated switching load of each switch (11, 12; 11, 13; 15, 16; 15, 17) and/or another item of information is provided,
and **in that** the control unit (100) is designed in such a way that a switching load on the switches (11, 12; 11, 13; 15, 16; 15, 17) is distributed at least approximately uniformly amongst the switches (11, 12; 11, 13; 15, 16; 15, 17), said switching load being brought about by initiation of the second operating mode, and, on the basis of the stored information, selects a switch (11, 12; 11, 13; 15, 16; 15, 17) to be closed for initiating the second operating mode.

2. Control device according to Claim 1, wherein the control unit (100) is designed in such a way that the switches (11, 12; 11, 13; 15, 16; 15, 17) are closed for initiating the second operating mode with the same frequency.

3. Control device according to one of the preceding claims, wherein the control unit (100) is designed in such a way that the switches (11, 12; 11, 13; 15, 16; 15, 17) used for initiating the second operating mode are determined statistically.

4. Control device according to one of the preceding claims, wherein at least one of the switches (11, 12; 11, 13; 15, 16; 15, 17) is in the form of a mechanical switch, in particular a relay switching contact pair.

5. Control device according to one of the preceding claims, wherein a plurality of the switches (11, 12; 11, 13; 15, 16; 15, 17), in particular all of the switches, are combined in a structural unit.

6. Control device according to one of Claims 1 to 5, for an electromechanical energy converter (10), in particular electric motor and/or electric generator, comprising two converter connections (21, 22), between which, in a first operating mode, an operating voltage (V_{B}) is to be applied and which are to be connected to one another in a second operating mode,
wherein the control device comprises:
an operating voltage source for providing the operating voltage (V_{B}) between a first supply connection (1) and a second supply connection (2),
controllable switches (11, 12; 11, 13; 15, 16; 15, 17), by means of which the converter connections (21, 22) can each be switched onto the first supply connection (1) and onto the second supply connection (2),
a further controllable switch (20, 30), by means of which the converter connections (21, 22) can be connected to one another, and
a control unit (100) for actuating the switches (11, 12; 11, 13; 15, 16; 15, 17).

7. Control device according to Claim 6, wherein the control unit (100) is designed in such a way that the further switch (20, 30) is also included in the at least approximately uniform distribution of the switching load brought about by initiation of the second operating mode.

8. Control device according to Claim 6 or 7, wherein the further switch (20, 30) is formed separately from the first-mentioned switches (11, 12; 11, 13; 15, 16; 15, 17).

9. Method for controlling an electromechanical energy converter (10), in particular an electric motor and/or electric generator, comprising two converter connections (20, 21), between which, in a first operating mode, an operating voltage (V_{B}) is to be applied and which are to be connected to one another in a second operating mode, said method comprising the following steps:
providing the operating voltage (V_{B}) between a first supply connection (1) and a second supply connection (2),
switching the converter connections (21, 22) in each case to the first supply connection (1) or to the second supply connection (2) by means of controllable switches (11, 12; 11, 13; 15, 16; 15, 17),
**characterized by** the following steps:
storing the accumulated switching load on each switch (11, 12; 11, 13; 15, 16; 15, 17) and/or another item of information in a storage device, and
actuating the switches (11, 12; 11, 13; 15, 16; 15, 17) in such a way that a switching load on the switches (11, 12; 11, 13; 15, 16; 15, 17) which is brought about by initiation of the second operating mode is distributed approximately uniformly among the switches (11, 12; 11, 13; 15, 16; 15, 17) and selecting a switch (11, 12; 11, 13; 15, 16; 15, 17) to be closed for initiating the second operating mode on the basis of the stored information.

10. Method according to Claim 9 for controlling an electromechanical energy converter (10), in particular an electric motor and/or electric generator, comprising two converter connections (21, 22), between which, in a first operating mode, an operating voltage (V_{B}) is to be applied and which are connected to one another in a second operating mode, said method comprising the following steps:
providing the operating voltage (V_{B}) between a first supply connection (1) and a second supply connection (2),
switching the converter connections (21, 22) in each case to the first supply connection (1) or to the second supply connection (2) by means of controllable switches (11, 12; 11, 13; 15, 16; 15, 17),
connecting the converter connections (21, 22) to one another by means of a further controllable switch (20, 30), and
actuating the switches (11, 12; 11, 13; 15, 16; 15, 17), and the further switch (20, 30).

## Revendications

1. Dispositif de commande d'un convertisseur (10) électromécanique d'énergie, notamment d'un moteur électrique et/ou d'une génératrice, ayant deux bornes (21, 22) de convertisseur, entre lesquelles, dans un premier mode de fonctionnement, une tension (V_{B}) de fonctionnement doit être appliquée et qui, dans un deuxième mode de fonctionnement, doivent être reliées entre elles,
dans lequel le dispositif de commande comprend :
une source de tension de fonctionnement pour mettre à disposition la tension (V_{B}) de fonctionnement entre une première borne (1) d'alimentation et une deuxième borne (2) d'alimentation,
des commutateurs (11, 12; 11, 13; 15, 16; 15, 17) qui peuvent être commandés et au moyen desquels les bornes (21, 22) du convertisseur peuvent être branchées respectivement sur la première borne (1) d'alimentation et sur la deuxième borne (2) d'alimentation, et
une unité (100) de commande pour commander le commutateur (11, 12; 11, 13; 15, 16; 15, 17),
**caractérisé en ce qu'**il est prévu un dispositif de mémorisation pour la mémorisation de la charge de commutation cumulée de chaque commutateur (11, 12; 11, 13; 15, 16; 15, 17) et/ou d'une autre information,
et **en ce que** l'unité (100) de commande est telle qu'une charge de commutation du commutateur (11, 12; 11, 13; 15, 16; 15, 17), provoquée par le déclenchement du deuxième mode de fonctionnement, est répartie au moins à peu près uniformément sur les commutateurs (11, 12; 11, 13; 15, 16; 15, 17) et il est choisi, sur la base de l'information mémorisée, un commutateur (11, 12; 11, 13; 15, 16; 15, 17) à fermer pour déclencher le deuxième mode de fonctionnement.

2. Dispositif de commande suivant la revendication 1, dans lequel l'unité (100) de commande est telle que les commutateurs (11, 12; 11, 13; 15, 16; 15, 17) sont fermés à la même fréquence pour le déclenchement du deuxième mode de fonctionnement.

3. Dispositif de commande suivant l'une des revendications précédentes, dans lequel l'unité (100) de commande est telle que les commutateurs (11, 12; 11, 13; 15, 16; 15, 17) utilisés pour le déclenchement du deuxième mode de fonctionnement sont déterminés statistiquement.

4. Dispositif de commande suivant l'une des revendications précédentes, dans lequel au moins l'un des commutateurs (11, 12; 11, 13; 15, 16; 15, 17) est constitué sous la forme d'un commutateur mécanique, notamment d'une paire de contacts de commutation de relais.

5. Dispositif de commande suivant l'une des revendications précédentes, dans lequel plusieurs des commutateurs (11, 12; 11, 13; 15, 16; 15, 17), notamment tous les commutateurs, sont rassemblés en une unité de construction.

6. Dispositif de commande suivant l'une des revendications 1 à 5, pour un convertisseur (10) électromécanique d'énergie, notamment pour un moteur électrique et/ou une génératrice, ayant deux bornes (21, 22) de convertisseur, entre lesquelles, dans un premier mode de fonctionnement, une tension (V_{B}) de fonctionnement doit être appliquée et qui, dans un deuxième mode de fonctionnement, doivent être reliées entre elles,
dans lequel le dispositif de commande comprend :
une source de tension de fonctionnement pour mettre à disposition la tension (V_{B}) de fonctionnement entre une première borne (1) d'alimentation et une deuxième borne (2) d'alimentation,
des commutateurs (11, 12; 11, 13; 15, 16; 15, 17) qui peuvent être commandés et au moyen desquels les bornes (21, 22) du convertisseur peuvent être branchées respectivement sur la première borne (1) d'alimentation et sur la deuxième borne (2) d'alimentation, et
un autre commutateur (20, 30) qui peut être commandé et au moyen duquel les bornes (21, 22) du convertisseur peuvent être reliées l'une à l'autre, et
une unité (100) de commande pour commander les commutateurs (11, 12; 11, 13; 15, 16; 15, 17).

7. Dispositif de commande suivant la revendication 6, dans lequel l'unité (100) de commande est telle que, pour la répartition au moins à peu près uniforme de la charge de commutation provoquée par le déclenchement du deuxième mode de fonctionnement, l'autre commutateur (20, 30) est inclus aussi.

8. Dispositif de commande suivant la revendication 6 ou 7, dans lequel l'autre commutateur (20, 30) est constitué d'une manière distincte des commutateurs (11, 12; 11, 13; 15, 16; 15, 17) mentionnés en premier.

9. Procédé de commande d'un convertisseur (10) électromécanique d'énergie, notamment d'un moteur électrique et/ou d'une génératrice, ayant deux bornes (21, 22) de convertisseur, entre lesquelles, dans un premier mode de fonctionnement, une tension (V_{B}) de fonctionnement doit être appliquée et qui, dans un deuxième mode de fonctionnement, doivent être reliées entre elles, comprenant les stades dans lesquels :
on met à disposition la tension (VB) de fonctionnement entre une première borne (1) d'alimentation et une deuxième borne (2) d'alimentation,
on branche les bornes (21, 22) du convertisseur respectivement sur la première borne (1) d'alimentation ou
sur la deuxième borne (2) d'alimentation au moyen de commutateurs (11, 12; 11, 13; 15, 16; 15, 17) qui peuvent être commandés,
**caractérisé par** les stades suivants :
on mémorise la charge de commutation cumulée de chaque commutateur (11, 12; 11, 13; 15, 16; 15, 17) et/ou une autre information dans un dispositif de mémorisation et on commande les commutateurs (11, 12; 11, 13; 15, 16; 15, 17), de manière à ce qu'une charge de commutation des commutateurs (11, 12; 11, 13; 15, 16; 15, 17) provoquée par le déclenchement du deuxième mode de fonctionnement soit répartie à peu près uniformément sur les commutateurs (11, 12; 11, 13; 15, 16; 15, 17) et on choisit un commutateur (11, 12; 11, 13; 15, 16; 15, 17) à fermer pour le déclenchement du deuxième mode de fonctionnement sur la base de l'information mémorisée.

10. Procédé suivant la revendication 9, de commande d'un convertisseur (10) électromécanique d'énergie, notamment d'un moteur électrique et/ou d'une génératrice, ayant deux bornes (21, 22) de convertisseur, entre lesquelles, dans un premier mode de fonctionnement, une tension (V_{B}) de fonctionnement doit être appliquée et qui, dans un deuxième mode de fonctionnement, doivent être reliées entre elles, comprenant les stades dans lesquels :
on met à disposition la tension (V_{B}) de fonctionnement entre une première borne (1) d'alimentation et une deuxième borne (2) d'alimentation,
on branche les bornes (21, 22) du convertisseur respectivement sur la première borne (1) d'alimentation ou
sur la deuxième borne (2) d'alimentation au moyen de commutateurs (11, 12; 11, 13; 15, 16; 15, 17) qui peuvent être commandés,
on relie entre elles les bornes (21, 22) du convertisseur au moyen d'un autre commutateur (20, 30) qui peut être commandé, et
on commande les commutateurs (11, 12; 11, 13; 15, 16; 15, 17) et l'autre commutateur (20, 30).
